# EUROPEAN PATENT APPLICATION

(11) **EP 3 098 750 A1**
(43) Date of publication of application: **30.11.2016**
(21) Application number: 14879425.8
(22) Date of filing: 15.08.2014
(51) Int. Cl.: G06K 9/00

(54) **BIOMETRIC FEATURE RECOGNITION DEVICE AND ELECTRONIC EQUIPMENT**

(30) Priority: 23.01.2014 CN 201410033872
(71) Applicant: Shenzhen Huiding Technology Co., Ltd., Shenzhen, Guangdong 518000 (CN)
(72) Inventor: LONG, Wei, Shenzhen Guangdong 518000 (CN)
(74) Representative: Flaherty, Annette Esther
(86) International application number: PCT/CN2014/084562
(87) International publication number: WO 2015/109828

(57) **Abstract**

A biometric feature recognition apparatus and an electronic device having the biometric feature recognition apparatus are disclosed. The biometric feature recognition apparatus includes: a chipset (10); a dielectric cover plate (20) located above the chipset (10); and a first conductor group (30) located above the dielectric cover plate (20), where the first conductor group (30) and the chipset (10) are interconnected, and the first conductor group (30) provides a pulse signal to a user finger when the finger is in contact with the biometric feature recognition apparatus. The biometric feature recognition apparatus has advantages of a high integration density and low subsequent manufacturing difficulty, and can be made into a super thin structure and therefore has great ornamental value. Moreover, interior of the biometric feature recognition apparatus can be protected, and is highly secure.

## Description

### Technical Field

The present invention relates to the technical field of biometric feature recognition, and in particular, to a biometric feature recognition apparatus and an electronic device having the biometric feature recognition apparatus.

### Related Art

Fingerprint recognition apparatuses or optical imaging apparatuses that are slid by using a finger is applied to new-generation electronic devices; however, sensitivity of a fingerprint recognition apparatus is relatively poor, and when there is dirty on a user finger or a user finger slides in an undesirable direction, the fingerprint recognition apparatus does not work. In addition, a user fingerprint is easily copied, and as a result, security of the fingerprint recognition apparatus is poor. Moreover, an optical imaging apparatus also has similar potential security risks.

Currently, capacitive-sensing fingerprint recognition apparatuses start to be applied to new-generation electronic devices; however, a capacitive-sensing fingerprint recognition apparatus has a very complex structure, and requirements on both a raw material process and a module encapsulation process are very high during production. Therefore, production efficiency and a success rate are very low, and production costs are very high.

### SUMMARY

The present invention aims to resolve at least one of the foregoing technical problems.

In view of this, a first objective of the present invention is to provide a biometric feature recognition apparatus. The apparatus has advantages of a high integration density and low subsequent manufacturing difficulty, and can be made into a super thin structure and therefore has great ornamental value. Moreover, interior of the biometric feature recognition apparatus can be protected, and is highly secure.

A second objective of the present invention is to provide an electronic device.

A third objective of the present invention is to provide a biometric feature recognition apparatus.

A third objective of the present invention is to provide an electronic device.

To achieve the foregoing objectives, a biometric feature recognition apparatus in a first embodiment of the present invention includes:
a chipset; a dielectric cover plate located above the chipset; and a first conductor group located above the dielectric cover plate, where the first conductor group and the chipset are interconnected, and the first conductor group provides a pulse signal to a user finger when the finger is in contact with the biometric feature recognition apparatus.

The biometric feature recognition apparatus in this embodiment of the present invention has the following advantages: 1. The biometric feature recognition apparatus has a high integration density and low subsequent manufacturing difficulty. In other words, the biometric feature recognition apparatus has relatively low production costs, there is a small quantity of integral structures and constituent devices thereof, there is no bottleneck in an assembly process, and there is no particular requirement on an assembly device and an assembly process. 2. The biometric feature recognition apparatus can be made into a super thin structure and therefore has great ornamental value. Moreover, interior of the biometric feature recognition apparatus can be protected, and is highly secure. 3. The biometric feature recognition apparatus is characterized by high signal strength and high sensing sensitivity.

To implement the foregoing embodiment, the present invention further provides an electronic device, where the electronic device includes the biometric feature recognition apparatus in the first embodiment of the present invention.

The electronic device in this embodiment of the present invention has the following advantages: 1. The electronic device has a high integration density and low subsequent manufacturing difficulty. In other words, the electronic device has relatively low production costs, there is a small quantity of integral structures and constituent devices thereof, there is no bottleneck in an assembly process, and there is no particular requirement on an assembly device and an assembly process; 2. The biometric feature recognition apparatus in the electronic device can be made into a super thin structure and therefore has great ornamental value. Moreover, interior of the biometric feature recognition apparatus can be protected, and is highly secure. 3. The biometric feature recognition apparatus in the electronic device is characterized by high signal strength and high sensing sensitivity.

To achieve the foregoing objectives, a third embodiment of the present invention provides a biometric feature recognition apparatus, including: a chipset, a dielectric cover plate located above the chipset; and a conductor group and a peripheral circuit that are attached to a back surface of the dielectric cover plate, where the conductor group provides a connection between the chipset and the peripheral circuit.

The biometric feature recognition apparatus in the embodiments of the present invention has the following advantages: 1. The biometric feature recognition apparatus has a high integration density and low subsequent manufacturing difficulty. In other words, the biometric feature recognition apparatus has relatively low production costs, there is a small quantity of integral structures and constituent devices thereof, there is no bottleneck in an assembly process, and there is no particular requirement on an assembly device and an assembly process. 2. The biometric feature recognition apparatus can be made into a super thin structure and therefore has great ornamental value. Moreover, interior of the biometric feature recognition apparatus can be protected, and is highly secure. 3. The biometric feature recognition apparatus is characterized by high signal strength and high sensing sensitivity.

To achieve the foregoing objectives, an electronic device in a fourth embodiment of the present invention includes the biometric feature recognition apparatus in the third embodiment of the present invention.

The electronic device in this embodiment of the present invention has the following advantages: 1. The electronic device has a high integration density and low subsequent manufacturing difficulty. In other words, the electronic device has relatively low production costs, there is a small quantity of integral structures and constituent devices thereof, there is no bottleneck in an assembly process, and there is no particular requirement on an assembly device and an assembly process. 2. The biometric feature recognition apparatus in the electronic device can be made into a super thin structure and therefore has great ornamental value. Moreover, interior of the biometric feature recognition apparatus can be protected, and is highly secure. 3. The biometric feature recognition apparatus in the electronic device is characterized by high signal strength and high sensing sensitivity.

Some additional aspects and advantages of the present invention are provided in the following description, and some become obvious in the following description, or are known by using practice of the present invention.

### BRIEF DESCRIPTION OF THE DRAWINGS

The foregoing and/or additional aspects and advantages of the present invention become obvious and easy to understand in description of the embodiments with reference to accompanying drawings.
FIG. 1 is a front plan view of a biometric feature recognition apparatus according to an embodiment of the present invention;
FIG. 2 is a back plan view of a biometric feature recognition apparatus according to an embodiment of the present invention;
FIG. 3 is a schematic structural diagram of an electronic device according to an embodiment of the present invention;
FIG. 4 is a back plan view of a biometric feature recognition apparatus according to another embodiment of the present invention; and
FIG. 5 is a schematic structural diagram of an electronic device according to another embodiment of the present invention.

### DETAILED DESCRIPTION

Embodiments of the present invention are described in detail in the following, and examples of the embodiments are shown in the accompanying drawings, where same or similar reference numerals indicate same or similar components, or components with same or similar functions. The following embodiments described with reference to the accompanying drawings are exemplary, and are used only to explain the present invention, and cannot be understood as a limitation on the present invention. On the contrary, the embodiments of the present invention include all changes, modifications, and equivalents that fall within the spirit and scope of the appended claims.

In description of the present invention, it should be understood that terminologies such as "first" and "second" are only for descriptive purpose, and shall not be construed as indicating or implying relative importance. In description of the present invention, it should be noted that, terminologies "interconnection" and "connection" should be understood in a broad sense, for example, may be a fixed connection, a detachable connection, or an integral connection; may be a mechanical connection or an electrical connection; and may be a direct connection or may be an indirect connection that is made by using an intermediate medium, unless otherwise definitely stipulated and limited. A person of ordinary skill in the art may understand specific meaning of the foregoing terminologies in a specific case. Moreover, in description of the present invention, "multiple" means two or more unless otherwise described.

An biometric feature recognition apparatus and an electronic device having the biometric feature recognition apparatus according to the embodiments of the present invention are described below with reference to the accompanying drawings.

Currently, a capacitive-sensing fingerprint recognition apparatus uses a capacitive sensing technology, this technology uses sensor electrode of a capacitive sensor and parallel arrangement of interleaved commands, the sensor electrode is formed by two capacitor plates, and a peak and a trough of a fingerprint become a constant dielectric between the two capacitor plates. After a user presses the sensor electrode with a finger, a pulse output from a metal ring on the sensor electrode is in contact with the finger of the user, a change of a constant dielectric between a peak and a trough of a fingerprint of the finger is fed back to a sensor circuit and becomes an analog signal, the analog signal is converted to a digital signal by a control circuit of the sensor, and a fingerprint graph is generated by using a preset algorithm, so that the fingerprint of the user is recognized.

However, a capacitive-sensing fingerprint recognition apparatus has a very complex structure, and requirements on both a raw material process and a module encapsulation process are very high during production. Therefore, production efficiency and a success rate are very low, and production costs are also very high. In view of this, the present invention provides a biometric feature recognition apparatus, where the apparatus is designed based on process capabilities of die factories of an existing common capacitive-sensing fingerprint recognition apparatus, and defects of the existing capacitive-sensing fingerprint recognition apparatus are resolved by using a new encapsulation structure. A biometric feature recognition apparatus in an embodiment of the present invention is described below in detail.

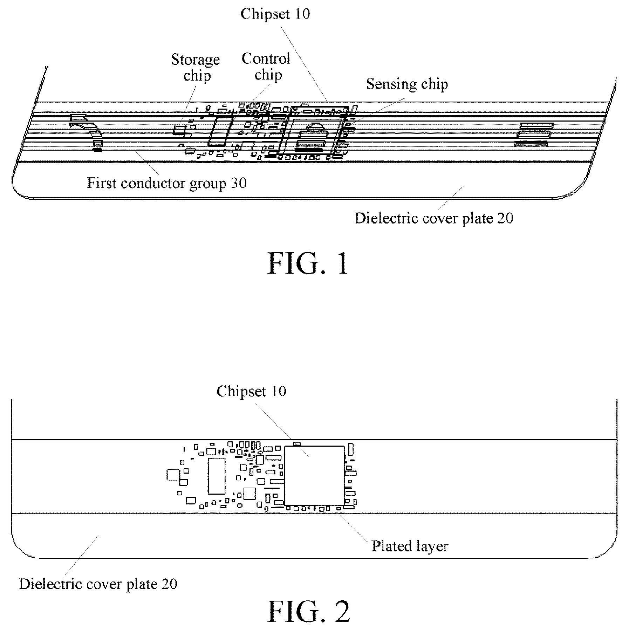

FIG. 1 is a front plan view of a biometric feature recognition apparatus according to an embodiment of the present invention, and FIG. 2 is a back plan view of a biometric feature recognition apparatus according to an embodiment of the present invention. As shown in FIG. 1 and FIG. 2, a biometric feature recognition apparatus 1 includes a chipset 10, a dielectric cover plate 20, a first conductor group 30, a second conductor group 40, a peripheral circuit 50, a first protective film 60, and a second protective film 70.

Specifically, a material that has a high dielectric constant and that is scratch-resistant may be used as the dielectric cover plate 20, and in this embodiment of the present invention, preferably, the dielectric cover plate 20 may be a sapphire glass or a high dielectric constant ceramic plate. The dielectric cover plate 20 is located above the chipset 10, and the chipset 10 includes a storage chip, a sensing chip, and a control chip. The sensing chip is a fingerprint detection chip, a pulse measurement chip, or a heartbeat measurement chip, and the fingerprint detection chip may be a capacitive sensor chip.

Specifically, the biometric feature recognition apparatus 1 may be configured to capture a fingerprint picture or capture an optical or another target unit for sensing recognition. The biometric feature recognition apparatus 1 is integrated with functions such as a touch control apparatus and fingerprint recognition, that is, all the control chip, the sensing chip, and the storage chip are integrated in the chipset 10, and are integrated on a back surface of the dielectric cover plate 20, that is, the dielectric cover plate 20 is located above the chipset 10. The dielectric cover plate 20 may be a panel having a touch function or may be a partial area of the panel, or has no touch function and has only a fingerprint recognition function. The control chip, the sensing chip, and the storage chip may become one or two chips, and provide a control circuit, a sensing circuit, and a storage circuit for the biometric feature recognition apparatus 1 respectively. Further, multiple die pad areas (die pad area) exist on the back surface of the dielectric cover plate 20, and the control chip, the sensing chip, the storage chip, and the like are separately disposed in the die pad areas.

In this embodiment of the present invention, the biometric feature recognition apparatus 1 further includes the first conductor group 30 plated on a front surface of the dielectric cover plate 20. As shown in the figure, the first conductor group 30 is located above the dielectric cover plate 20, the first conductor group 30 includes 3 to 6 metal conductors, a metal conductor in the first conductor group 30 is a transparent metal conductor, and preferably, the first conductor group 30 includes 5 metal conductors. The first conductor group 30 and the chipset 10 are interconnected, and the first conductor group 30 provides a pulse signal to a user finger when the finger is in contact with the biometric feature recognition apparatus 1. Specifically, the first conductor group 30 may be formed by several metal conductors, or may be formed by a plated metal layer. The first conductor group 30 (or an area covered by the first conductor group 30) is interconnected to a lower plated layer circuit, so that when a user finger is in contact with the biometric feature recognition apparatus 1, the finger can touch and sense a pulse signal that is sent by a control circuit provided by the control chip and that is conducted by the first conductor group 30 (or an area covered by the first conductor group 30). Therefore, signal strength can be increased, and sensitivity of the biometric feature recognition apparatus 1 can be improved.

In this embodiment of the present invention, the biometric feature recognition apparatus 1 further includes the second conductor group 40 (not shown in the figure) and the peripheral circuit 50 (not shown in the figure) attached to the back surface of the dielectric cover plate 20, and the second conductor group 40 provides a connection between the chipset 10 and the peripheral circuit 50. Specifically, the control chip, the sensing chip, and the storage chip may be interconnected by using a plated layer of a long and narrow area of the dielectric cover plate 20, thickness of the plated layer is at a nanometer level, and the quantity of the plated layers may be automatically set according to needs. Further, a plated layer on the back surface of the dielectric cover plate 20 may be produced by means of common deposition, plated layers are separated by a conductive plated layer and a non-conductive plated layer, and a plated layer is very thin and is at a nanometer level, to implement a function similar to that of a PCB board (Printed Circuit Board, printed circuit board). The control chip, the sensing chip, and the storage chip may be interconnected to the plated layer by means of a bond wire, flip of a metal protrusion, or the like. It should be noted that because the plated layer is very thin, a wire width and space should be relatively large, to ensure that a circuit resistance has a small effect.

It should be understood that, the dielectric cover plate 20 may be, for example, a rectangle or a square, and the long and narrow plated layer area on the back surface of the dielectric cover plate 20 may further include another related circuit, for example, a DC-DC step-up circuit or a filter circuit. A related land further exists outside the plated layer, and therefore, some high-voltage/high-frequency components may be mounted on the land, that is, some high-voltage/high-frequency components of circuits may be directly mounted on the plated layer by means of an SMT (Surface Mounted Technology, Surface Mounted Technology). In other words, the plated layer includes a transparent metal plated layer structure on a front surface and a large-scale integrated circuit structure on a back surface, or includes a land that includes some components and a die pad area.

In this embodiment of the present invention, the biometric feature recognition apparatus 1 further includes the first protective film 60 (not shown in the figure) that covers at least a partial area in the first conductor group 30 and the second protective film 70 (not shown in the figure) that covers at least a partial area in the second conductor group 40. Specifically, after circuits and electrical devices in the biometric feature recognition apparatus 1 are welded, the first protective film 60 and the second protective film 70 should be separately used for protection outside the first conductor group 30 and the second conductor group 40. In other words, a plated layer circuit should expose only a partial contact area, and a remaining area should be protected. The first protective film 60 and the second protective film 70 may be epoxy resin materials that is high-temperature resistant and have enough hardness, and the first protective film 60 and the second protective film 70 may be made into an EMC (Electro Magnetic Compatibility, electro magnetic compatibility)/EMI (Electromagnetic Interference, Electromagnetic Interference) isolation layer. It should be understood that the first protective film 60 and the second protective film 70 may further be other materials similar to epoxy resin. The first protective film 60 and the second protective film 70 have a function of fastening a structure and protecting an internal chip of the biometric feature recognition apparatus 1, and further have a function such as high-temperature resistance and signal isolation.

Further, a fingerprint recognition sensor circuit in the biometric feature recognition apparatus 1 is in a mode of a capacitive connection, and forms another electrode of a capacitor with a ridge and a trough of a finger of a user, epidermis of the finger of the user is characterized by a constant dielectric constant, and when body fluid of a user changes or a user uses another finger, read capacitances are different, thereby achieving an objective of distinguishing from a finger of another user. The fingerprint recognition sensor circuit includes a pixel matrix, and on one hand, the pixel matrix is used to measure a capacitance between multiple capacitor plates, and on the other hand, the pixel matrix is used to measure a fingerprint of a user (for example, epidermis of a finger of a user), to provide an information effect of a peak and a trough in a picture relative to epidermis of the finger.

It should be understood that, a high integration degree of the biometric feature recognition apparatus 1 can resolve attenuation of signal interconnected between many electrical devices, can recognize a user fingerprint characteristic more conveniently and flexibly, and can use the user fingerprint characteristic as a system password lock to prevent user information leakage and protect user privacy. Compared with an existing password input or gesture password manner, the biometric feature recognition apparatus 1 in this embodiment of the present invention has a more simple structure, and performs recognition more conveniently and more securely. Moreover, after modules of the entire biometric feature recognition apparatus 1 are encapsulated, a protection layer may cover an upper layer of a chip on the back surface of the dielectric cover plate 20, and the protection layer may be epoxy resin or another similar material that is high-temperature resistant and scratch resistant. A module may be connected to a motherboard by using an FPC (Flexible Printed Circuit, flexible printed circuit), that is, a related signal is led to the motherboard by using the FPC, and a module should need a COF (Chip On Flex, chip on flex)/COB (Chip On Board, chip on board) process capability.

The biometric feature recognition apparatus in this embodiment of the present invention has the following advantages:
1. The biometric feature recognition apparatus has a high integration density and low subsequent manufacturing difficulty. In other words, the biometric feature recognition apparatus has relatively low production costs, there is a small quantity of integral structures and constituent devices thereof, there is no bottleneck in an assembly process, and there is no particular requirement on an assembly device and an assembly process.
2. The biometric feature recognition apparatus can be made into a super thin structure and therefore has great ornamental value. Moreover, interior of the biometric feature recognition apparatus can be protected, and is highly secure.
3. The biometric feature recognition apparatus is characterized by high signal strength and high sensing sensitivity.

To implement the foregoing embodiment, the present invention further provides an electronic device, where the electronic device includes the biometric feature recognition apparatus in the first embodiment of the present invention.

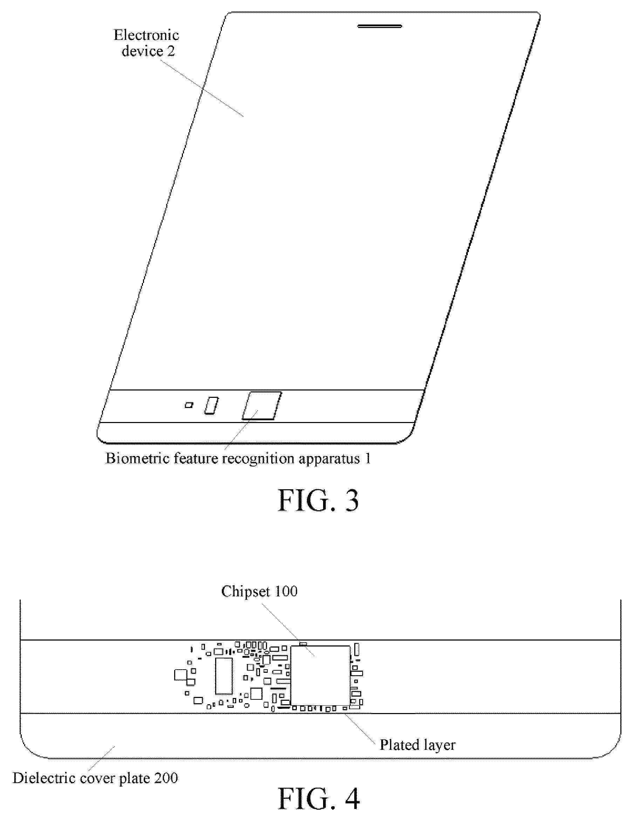

FIG. 3 is a schematic structural diagram of an electronic device according to an embodiment of the present invention.

As shown in FIG. 3, an electronic device 2 may include but is not limited to a mobile phone, a palmtop computer, an audio/video player, a navigator, a notebook, or a personal computer having a biometric feature recognition apparatus 1. Specifically, the biometric feature recognition apparatus 1 may be disposed below a control button or a display component of the electronic device 2, for example, when the electronic device 2 is a mobile phone, the biometric feature recognition apparatus 1 may be located in a Home key area of the mobile phone. Therefore, fingerprint recognition and fingerprint verification may be implemented by a user by performing an operation on the electronic device 2.

The electronic device in this embodiment of the present invention has the following advantages:
1. The electronic device has a high integration density and low subsequent manufacturing difficulty. In other words, the electronic device has relatively low production costs, there is a small quantity of integral structures and constituent devices thereof, there is no bottleneck in an assembly process, and there is no particular requirement on an assembly device and an assembly process.
2. The biometric feature recognition apparatus in the electronic device can be made into a super thin structure and therefore has great ornamental value. Moreover, interior of the biometric feature recognition apparatus can be protected, and is highly secure.
3. The biometric feature recognition apparatus in the electronic device is characterized by high signal strength and high sensing sensitivity.

To implement the foregoing embodiment, the present invention further provides a biometric feature recognition apparatus.

FIG. 4 is a back plan view of a biometric feature recognition apparatus according to another embodiment of the present invention.

As shown in FIG. 4, the biometric feature recognition apparatus 3 includes a chipset 100, a dielectric cover plate 200, a conductor group 300, a peripheral circuit400, and a protection film 500.

Specifically, a material that has a high dielectric constant and that is scratch-resistant may be used as the dielectric cover plate 200, and in this embodiment of the present invention, preferably, the dielectric cover plate 200 may be a sapphire glass or a high dielectric constant ceramic plate. The dielectric cover plate 200 is located above the chipset 100, and the chipset 100 includes a storage chip, a sensing chip, and a control chip. The sensing chip is a fingerprint detection chip, a pulse measurement chip, or a heartbeat measurement chip, and the fingerprint detection chip may be a capacitive sensor chip.

Specifically, the biometric feature recognition apparatus 3 may be configured to capture a fingerprint picture or capture an optical or another target unit for sensing recognition. The biometric feature recognition apparatus 3 is integrated with functions such as a touch control apparatus and fingerprint recognition, that is, all the control chip, the sensing chip, and the storage chip are integrated in the chipset 100, and are integrated on a back surface of the dielectric cover plate 200, that is, the dielectric cover plate 200 is located above the chipset 100. The dielectric cover plate 200 may be a panel having a touch function or may be a partial area of the panel, or has no touch function and has only a fingerprint recognition function. The control chip, the sensing chip, and the storage chip may become one or two chips, and provide a control circuit, a sensing circuit, and a storage circuit for the biometric feature recognition apparatus 3 respectively. Further, multiple die pad areas (die pad area) exist on the back surface of the dielectric cover plate 200, and the control chip, the sensing chip, the storage chip, and the like are separately disposed in the die pad areas.

In this embodiment of the present invention, the biometric feature recognition apparatus 3 further includes the conductor group 300 (not shown in the figure) and the peripheral circuit 400 (not shown in the figure) attached to the back surface of the dielectric cover plate 200, and the conductor group 300 provides a connection between the chipset 100 and the peripheral circuit 400. Specifically, the control chip, the sensing chip, and the storage chip may be interconnected by using a plated layer of a long and narrow area of the dielectric cover plate 200, thickness of the plated layer is at a nanometer level, and layers of the plated layer may be automatically set according to needs. Further, a plated layer on the back surface of the dielectric cover plate 200 may be produced by means of common deposition, plated layers are separated by a conductive plated layer and a non-conductive plated layer, and a plated layer is very thin and is at a nanometer level, to implement a function similar to that of a PCB board (Printed Circuit Board, printed circuit board). The control chip, the sensing chip, and the storage chip may be interconnected to the plated layer by means of a bond wire, flip of a metal protrusion, or the like. It should be noted that because the plated layer is very thin, a wire width and space should be relatively large, to ensure that a circuit resistance has a small effect.

It should be understood that, the dielectric cover plate 200 may be, for example, a rectangle or a square, and the long and narrow plated layer area on the back surface of the dielectric cover plate 200 may further include another related circuit, for example, a DC-DC step-up circuit or a filter circuit. A related land further exists outside the plated layer, and therefore, some high-voltage/high-frequency components may be mounted on the land, that is, some high-voltage/high-frequency components of circuits may be directly mounted on the plated layer by means of an SMT (Surface Mounted Technology, Surface Mounted Technology). In other words, the plated layer includes a transparent metal plated layer structure on a front surface and a large-scale integrated circuit structure on a back surface, or includes a land that includes some components and a die pad area.

In this embodiment of the present invention, the biometric feature recognition apparatus 3 further includes the protection film 500 (not shown in the figure) that covers at least a partial area of the conductor group 300. Specifically, after circuits and electrical devices in the biometric feature recognition apparatus 3 are welded, the protective film 500 should be used for protection outside the conductor group 300. In other words, a plated layer circuit should expose only a partial contact area, and a remaining area should be protected. The protective film 500 may be an epoxy resin material that is high-temperature resistant and have enough hardness, and the protective film 500 may be made into an EMC (Electro Magnetic Compatibility, electro magnetic compatibility)/EMI (Electromagnetic Interference, Electromagnetic Interference) isolation layer. It should be understood that the protective film 500 may further be another material similar to epoxy resin. The protective film 500 has a function of fastening a structure and protecting an internal chip of the biometric feature recognition apparatus 3, and further has a function such as high-temperature resistance and signal isolation.

It should be understood that, a high integration degree of the biometric feature recognition apparatus 3 can resolve attenuation of signal interconnected between many electrical devices, can recognize a user fingerprint characteristic more conveniently and flexibly, and can use the user fingerprint characteristic as a system password lock to prevent user information leakage and protect user privacy. Compared with an existing password input or gesture password manner, the biometric feature recognition apparatus 3 in this embodiment of the present invention has a more simple structure, and performs recognition more conveniently and more securely. Moreover, after modules of the entire biometric feature recognition apparatus 3 are encapsulated, a protection layer may cover an upper layer of a chip on the back surface of the dielectric cover plate 200, and the protection layer may be epoxy resin or another similar material that is high-temperature resistant and scratch resistant. A module may be connected to a motherboard by using an FPC (Flexible Printed Circuit, flexible printed circuit), that is, a related signal is led to the motherboard by using the FPC, and a module should need a COF (Chip On Flex, chip on flex)/COB (Chip On Board, chip on board) process capability.

The biometric feature recognition apparatus in this embodiment of the present invention has the following advantages:
1. The biometric feature recognition apparatus has a high integration density and low subsequent manufacturing difficulty. In other words, the biometric feature recognition apparatus has relatively low production costs, there is a small quantity of integral structures and constituent devices thereof, there is no bottleneck in an assembly process, and there is no particular requirement on an assembly device and an assembly process.
2. The biometric feature recognition apparatus can be made into a super thin structure and therefore has great ornamental value. Moreover, interior of the biometric feature recognition apparatus can be protected, and is highly secure.
3. The biometric feature recognition apparatus is characterized by high signal strength and high sensing sensitivity.

To implement the foregoing embodiment, the present invention further provides an electronic device, where the electronic device includes the biometric feature recognition apparatus in the third embodiment of the present invention.

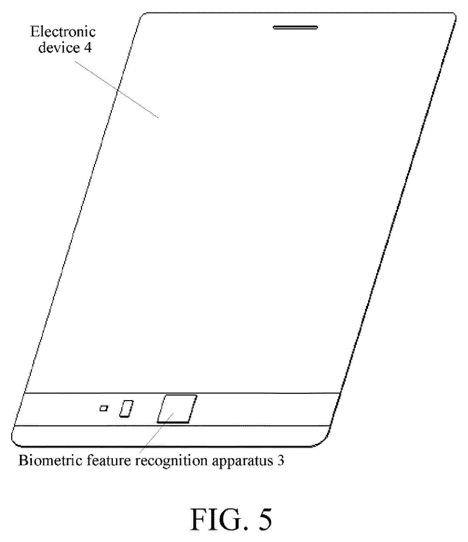

FIG.5 is a schematic structural diagram of an electronic device according to another embodiment of the present invention.

As shown in FIG. 5, an electronic device 4 may include but is not limited to a mobile phone, a palmtop computer, an audio/video player, a navigator, a notebook, or a personal computer having a biometric feature recognition apparatus 3. Specifically, the biometric feature recognition apparatus 3 may be disposed below a control button or a display component of the electronic device 4, for example, when the electronic device 4 is a mobile phone, the biometric feature recognition apparatus 3 may be located in a Home key area of the mobile phone. Therefore, fingerprint recognition and fingerprint verification may be implemented by a user by performing an operation on the electronic device.

The electronic device in this embodiment of the present invention has the following advantages:
1. The electronic device has a high integration density and low subsequent manufacturing difficulty. In other words, the electronic device has relatively low production costs, there is a small quantity of integral structures and constituent devices thereof, there is no bottleneck in an assembly process, and there is no particular requirement on an assembly device and an assembly process.
2. The biometric feature recognition apparatus in the electronic device can be made into a super thin structure and therefore has great ornamental value. Moreover, interior of the biometric feature recognition apparatus can be protected, and is highly secure.
3. The biometric feature recognition apparatus in the electronic device is characterized by high signal strength and high sensing sensitivity.

In description of this specification, descriptions such as reference terminologies "first embodiment", "some embodiments", "example", "specific example", and "some examples" refer to that a specific characteristic, structure, material, or feature described with reference to the embodiment or example is included in at least one embodiment or example of the present invention.

In this specification, exemplary description of the foregoing terminologies may not refer to a same embodiment or example. Moreover, a described specific characteristic, structure, material, or feature may be properly combined in any one or more embodiments or examples.

Although the embodiments of the present invention are already shown and described, a person of ordinary skill in the art may understand that multiple changes, modifications, replacements, and variations may be made to the embodiments without departing from the principle and objective of the present invention, and the scope of the present invention is limited by claims and equivalents thereof.

### Industrial applicability

The biometric feature recognition apparatus and the electronic device in the embodiments of the present invention has the following advantages: 1. The biometric feature recognition apparatus has a high integration density and low subsequent manufacturing difficulty. In other words, the biometric feature recognition apparatus has relatively low production costs, there is a small quantity of integral structures and constituent devices thereof, there is no bottleneck in an assembly process, and there is no particular requirement on an assembly device and an assembly process. 2. The biometric feature recognition apparatus can be made into a super thin structure and therefore has great ornamental value. Moreover, interior of the biometric feature recognition apparatus can be protected, and is highly secure. 3. The biometric feature recognition apparatus is characterized by high signal strength and high sensing sensitivity.

## Claims

1. A biometric feature recognition apparatus, comprising:
a chipset;
a dielectric cover plate located above the chipset; and
a first conductor group located above the dielectric cover plate,wherein the first conductor group and the chipset are interconnected, and the first conductor group provides a pulse signal to a user finger when the finger is in contact with the biometric feature recognition apparatus.

2. The biometric feature recognition apparatus according to claim 1, wherein a metal conductor in the first conductor group is a transparent metal conductor.

3. The biometric feature recognition apparatus according to claim 1, wherein the chipset comprises a storage chip, a sensing chip, and a control chip.

4. The biometric feature recognition apparatus according to claim 3, wherein the sensing chip is a fingerprint detection chip, a pulse measurement chip, or a heartbeat measurement chip.

5. The biometric feature recognition apparatus according to claim 4, wherein the fingerprint detection chip is a capacitive sensor chip.

6. The biometric feature recognition apparatus according to claim 1, wherein the dielectric cover plate is a sapphire glass or a high dielectric constant ceramic plate.

7. The biometric feature recognition apparatus according to claim 1, further comprising:
a first protective film that covers at least a partial area of the first conductor group.

8. The biometric feature recognition apparatus according to claim 7, wherein the first protective film is epoxy resin.

9. The biometric feature recognition apparatus according to claim 1, further comprising:
a second conductor group and a peripheral circuit that are attached to a back surface of the dielectric cover plate, wherein the second conductor group provides a connection between the chipset and the peripheral circuit.

10. The biometric feature recognition apparatus according to claim 9, further comprising:
a second protective film that covers at least a partial area of the second conductor group.

11. The biometric feature recognition apparatus according to claim 10, wherein the second protective film is epoxy resin.

12. An electronic device, comprising the biometric feature recognition apparatus according to any one of claims 1 to 11.

13. The electronic device according to claim12, wherein the electronic device is a mobile phone, a palmtop computer, an audio/video player, a navigator, a notebook, or a personal computer.

14. The electronic device according to claim 13, wherein when the electronic device is a mobile phone, the biometric feature recognition apparatus is located in a Home key area of the mobile phone.

15. A biometric feature recognition apparatus, comprising:
a chipset;
a dielectric cover plate located above the chipset; and
a conductor group and a peripheral circuit that are attached to a back surface of the dielectric cover plate, wherein the conductor group provides a connection between the chipset and the peripheral circuit.

16. The biometric feature recognition apparatus according to claim 15, wherein the chipset comprises a storage chip, a sensing chip, and a control chip.

17. The biometric feature recognition apparatus according to claim 16, wherein the sensing chip is a fingerprint detection chip, a pulse measurement chip, or a heartbeat measurement chip.

18. The biometric feature recognition apparatus according to claim 17, wherein the fingerprint detection chip is a capacitive sensor chip.

19. The biometric feature recognition apparatus according to claim 15, wherein the dielectric cover plate is a sapphire glass or a high dielectric constant ceramic plate.

20. The biometric feature recognition apparatus according to claim 15, further comprising:
a protective film that covers at least a partial area of the conductor group.

21. The biometric feature recognition apparatus according to claim 20, wherein the protective film is epoxy resin.

22. An electronic device, comprising the biometric feature recognition apparatus according to any one of claims 15 to 21.

23. The electronic device according to claim 22, wherein the electronic device is a mobile phone, a palmtop computer, an audio/video player, a navigator, a notebook, or a personal computer.

24. The electronic device according to claim 23, wherein when the electronic device is a mobile phone, the biometric feature recognition apparatus is located in a Home key area of the mobile phone.
